# FASCICULE DE BREVET EUROPEEN

(11) **EP 0 646 771 B1**
(45) Date de publication et mention de la délivrance du brevet: **03.06.1998**
(21) Numéro de dépôt: 94402198.9
(22) Date de dépôt: 03.10.1994
(51) Int. Cl.: G01C 7/04

(54) **Appareil de mesure de la déflexion d'une chaussée**
Fahrbahndeformationsmessgerät
Apparatus to measure the deformation of a roadway

(30) Priorité: 05.10.1993 FR 9311836
(43) Date de publication de la demande: 05.04.1995
(73) Titulaire: ETAT FRANCAIS REPRESENTE PAR LE LABORATOIRE CENTRAL DES PONTS ET CHAUSSEES, 75015 Paris (FR)
(72) Inventeur: Lebrun,Jean-Pierre, F-49770 La Meignanne (FR); Noret,Hubert, F-49100 Angers (FR); Vialletel,Hugues, F-49100 Angers (FR)
(74) Mandataire: Hasenrader, Hubert

(56) Documents cités:
- EP-A- 0 022 082
- FR-A- 1 552 070
- FR-A- 2 076 423

## Description

La présente invention concerne un appareil de mesure de la déflexion d'une chaussée, associé à un véhicule comprenant un châssis, des roues avant et un essieu arrière de charge présentant deux paires de roues arrière.

L'appareil est destiné à mesurer la déflexion de la chaussée sous l'effet du passage dudit essieu arrière de charge et comprend :
- un chariot reposant sur la chaussée par l'intermédiaire de deux appuis avant et d'un appui arrière définissant un plan de référence, les appuis avant étant disposés de part et d'autre de l'axe longitudinal du chariot et l'appui arrière étant sensiblement situé sur ledit axe,
- des moyens de détermination de la déflexion de la chaussée comprenant deux bras palpeurs montés pivotants par leurs extrémités avant sur une partie intermédiaire du chariot, autour d'un axe perpendiculaire à l'axe longitudinal dudit chariot, et reposant sur la chaussée par leurs extrémités arrière munies de patins, respectivement placées sur les trajectoires d'avancement des entraxes de chaque paire de roues et susceptibles de pénétrer entre lesdites roues de chaque paire au-delà de l'aplomb desdits entraxes, lesdits moyens de détermination comprenant en outre des moyens de calcul de la déflexion de la chaussée en fonction de l'attitude des bras palpeurs et étant associés à des moyens de stockage des valeurs calculées,
- des moyens de déplacement du chariot associés à des moyens de commande, pour libérer le chariot avant chaque cycle de mesure et pour ramener ledit chariot vers l'avant à une vitesse par rapport au sol supérieure à celle du véhicule après chaque cycle de mesure.

De tels appareils, connus par le brevet français n° 1.552.070, présentent l'inconvénient d'être relativement lents, puisque leur vitesse d'avancement en phase de mesure n'est pas supérieure à 3,5 km/h. De plus, on suppose généralement que la première mesure effectuée, prise comme valeur de référence, ou "zéro de la déflection", est réalisée dans une région de la route non encore perturbée par l'essieu de charge. Ceci est cependant rarement le cas puisque les trois points d'appui du chariot se trouvent en avant de l'essieu arrière de charge, l'appui arrière se trouvant même à une distance relativement faible de cet essieu de charge. De ce fait, les mesures réalisées ne correspondent qu'à des valeurs approchées (par défaut) de la déflexion.

Par ailleurs, les appareils connus présentent, il est vrai, des moyens de positionnement du chariot par rapport au véhicule de charge qui permettent, pour des mesures en virage, de prépositionner le chariot en fonction du rayon de braquage du véhicule. Cependant si, par suite d'une erreur, même légère, de la part du conducteur ou d'un écart du véhicule dû à une cause extérieure, le rayon de braquage se trouve modifié pendant la mesure, les bras palpeurs risquent d'être endommagés voire écrasés par les roues de l'essieu arrière de charge. Avec les appareils existants, de tels accidents sont relativement fréquents et occasionnent des pertes importantes. Pour les éviter, on est conduit à limiter la vitesse du véhicule dans les virages, ce qui ralentit encore la rapidité des mesures. De plus, on a été conduit à fabriquer des appareils dits "à châssis long" ayant un empattement de 6,8 m pour les mesures sur les chaussées du type route nationale de plaine ou autoroute, et des appareils plus maniables, dits "à châssis court", ayant un empattement de 4,8 m pour les mesures sur les chaussées du type route départementale ou routes nationale de montagne. Les mesures effectuées par les appareils à châssis court sont évidemment moins précises que celles effectuées par les appareils à châssis long. De toute façon, cette nécessité d'avoir deux types d'appareils augmente évidemment les coûts de revient.

L'invention a pour but de remédier à ces inconvénients en proposant un appareil permettant une détermination rapide du zéro de la déflection à partir de la première mesure effectuée, une précision de la mesure au moins équivalente à celle des appareils à châssis long sur tout type de chaussée, une vitesse de déplacement en mesure plus rapide, par exemple de l'ordre de 10 km/h, et une sécurité totale vis à vis de l'écrasement des bras palpeurs par les roues arrière qui autorise l'utilisation d'un même appareil sur tout type de chaussée.

Dans ce but, les deux appuis avant sont disposés à l'avant du chariot et déterminent une droite perpendiculaire à l'axe longitudinal dudit chariot, tandis que l'appui arrière est, dès le début de chaque cycle de mesure, placé en arrière dudit essieu arrière. De plus l'appareil comprend des moyens de guidage du chariot destinés à guider ledit chariot en fonction du rayon de braquage du véhicule en empêchant tout écrasement des bras palpeurs par les roues arrière.

Même si la première mesure effectuée se situe, non en dehors de la zone d'influence de l'essieu arrière, mais déjà au bord de la cuvette de déflexion, la disposition de l'appui arrière au-delà de l'essieu arrière dès le début de chaque cycle de mesure permet de faire en sorte que l'on bénéficie du basculement du chariot lors de l'avancée du camion en sens contraire du pivotement des bras palpeurs. On obtient ainsi une compensation de la déflexion initiale prise comme valeur de référence. La précision de la mesure s'en trouve améliorée, un appareil d'empattement court donnant une précision au moins équivalente à celle des châssis longs classiques.

Les moyens de guidage permettent de réaliser des mesures à une plus grande vitesse tout en empêchant toute dégradation du matériel. Si, en cours de mesure, le rayon de braquage du véhicule se trouve modifié au-delà d'une valeur acceptable, les moyens de guidage guident le chariot de telle sorte que les bras palpeurs échappent à l'écrasement par les roues arrière. Si le chariot est par trop déplacé latéralement, les mesures peuvent être erronées et les cycles de mesure à recommencer, mais le matériel n'a subi aucune dégradation. Un même appareil peut donc être utilisé sur tout le réseau routier, sans que la précision ni la rapidité des mesures se trouvent affectées.

Les moyens de guidage du chariot comportent avantageusement des galets faisant saillie à partir de la face supérieure du chariot et disposés par paires de part et d'autre de l'axe longitudinal de ce chariot et dans un plan perpendiculaire à cet axe. Ces galets comprennent au moins une paire de galets avant et une paire de galets arrière. Les moyens de guidage comportent en outre des éléments allongés de guidage des galets, dont une partie au moins est susceptible de pivoter en fonction du braquage des roues avant du véhicule.

De préférence, les éléments allongés de guidage comprennent deux guides arrière fixes et deux guides arrière mobiles s'étendant vers l'arrière du chariot, à l'extérieur des galets arrière, c'est-à-dire en dehors de ces galets par rapport à la position de l'axe longitudinal du chariot. Les guides arrière mobiles s'étendent approximativement longitudinalement et sont mobiles en pivotement en fonction du braquage des roues avant, tandis que les guides arrière fixes présentent des parties arrière sensiblement parallèles à l'axe longitudinal du chariot et des parties avant divergentes déterminant le déplacement angulaire maximal des galets arrière. Les éléments allongés de guidage comportent en outre des guides avant qui comprennent des surfaces de guidage approximativement longitudinales s'étendant entre les galets avant et mobiles en pivotement en fonction du rayon de braquage du véhicule.

Pour éviter l'écrasement des bras palpeurs, il est avantageux que la distance maximale entre les guides et les galets soit au plus égale à l'espacement des roues de chaque paire de roues arrière. Ceci permet en effet de guider le chariot de telle sorte que l'extrémité arrière des bras palpeurs se trouve toujours située entre les paires de roues arrière, tout en autorisant un léger débattement latéral du chariot.

Un ensemble de butée est avantageusement prévu, comprenant des moyens de butée avant pour déterminer la position d'extrême avancement du chariot par rapport au véhicule, et des moyens de butée arrière pour déterminer la position d'extrême recul du chariot par rapport au véhicule à la fin d'un cycle de mesure.

Les appareils connus présentent des problèmes de mise en vibration du chariot dûs au frottement des appuis sur la chaussée. Ces vibrations peuvent entraîner des erreurs au niveau de la mesure, il importe donc de les réduire au maximum et même de les éliminer. A cet effet, le chariot est avantageusement fabriqué en matériau composite et possède une fréquence propre d'environ 21 hertz. Cette fréquence de 21 hertz est notablement supérieure aux fréquences des vibrations sur la chaussée qui sont en général de l'ordre de 5 à 10 hertz. Ceci permet d'éviter toute mise en résonance de l'appareil et d'accélérer l'atténuation des vibrations dûes au frottement des appuis sur la chaussée. De plus, le matériau composite est à la fois rigide et léger, ce qui facilite le déplacement du chariot par les moyens de déplacement.

Par ailleurs, toujours dans le but d'améliorer la rapidité de l'appareil, l'ensemble de butée est avantageusement associé à des amortisseurs du choc du chariot. Les moyens de butée avant comprennent avantageusement un système restituteur d'énergie destiné, lorsque le chariot est libéré avant un cycle de mesure, à restituer l'énergie emmagasiné lors du choc des moyens de butée avant. Ce système restituteur d'énergie facilite donc le freinage et l'immobilisation du chariot sur la chaussée dès que celui-ci est libéré avant chaque cycle de mesure par ces moyens de déplacement.

Les moyens de commande des moyens de déplacement du chariot comprennent avantageusement des moyens de détermination automatique des séquences de déplacement et de libération du chariot sur la chaussée, associés à des capteurs de position qui permettent de commander les différentes phases.

L'appareil comporte avantageusement au moins un inclinomètre destiné à déterminer le rayon de courbure de la chaussée.

Cet inclinomètre comporte au moins un bras articulé muni d'un patin, monté à l'extrémité arrière de l'un des bras palpeurs, mobile en pivotement autour d'un axe horizontal. Ce bras articulé peut donc suivre les pentes dues à la déflexion générée par le passage de l'essieu arrière, son patin restant au contact de la chaussée. L'inclinomètre comporte en outre des moyens de mesure du déplacement angulaire du bras articulé autour de son axe de pivotement, et des moyens de calcul du rayon de courbure de la chaussée à partir de ce déplacement angulaire. Il est en outre associé à des moyens de stockage des valeurs calculées qui stockent la courbure ou le rayon de courbure au sommet de la cuvette de déflexion. On ne stocke donc de préférence qu'une valeur par cycle de mesures. En fait, on mesure le déplacement angulaire du bras articulé sur quelques points en avant et en arrière de l'essieu arrière. La moyenne des mesures effectuées sur ces quelques points donne, par dérivation, la courbure au sommet de la cuvette de déflexion. Le rayon de courbure est l'inverse de cette courbure.

L'appareil est avantageusement associé à un système informatique destiné à éliminer des valeurs calculées aberrantes. Ces valeurs considérées comme aberrantes seront déterminées à partir de tests prédéfinis qui tiennent compte de l'expérience acquise en la matière. Ainsi toute source d'erreur dûe par exemple au glissement du chariot sur la chaussée pourra être éliminée. Ce système informatique peut faire partie d'un logiciel qui assure également la collecte et le stockage des mesures effectuées, le calcul de la déflexion, et, le cas échéant, celui du rayon de courbure.

L'invention sera bien comprise et ses avantages apparaîtront mieux à la lecture de la description détaillée qui suit de modes de réalisation donnés à titres d'exemples non limitatifs. La description se réfère aux figures annexées sur lesquelles :
- la figure 1 montre, en vue de dessus, l'appareil associé au véhicule,
- la figure 2 montre en perspective le chariot seul,
- la figure 3 montre en perspective l'appareil associé au véhicule en virage,
- la figure 4 présente en vue de dessus l'appareil associé au véhicule en virage, en position de butée avant du chariot,
- la figure 5 est une vue analogue à la figure 4, le véhicule ayant avancé de telle sorte que les extrémités des bras palpeurs se trouvent à l'aplomb des entraxes des paires de roues arrière,
- la figure 6 présente l'extrémité arrière d'un bras palpeur muni d'un bras articulé,
- les figures 7a et 7b sont deux organigrammes illustrant le traitement des mesures.

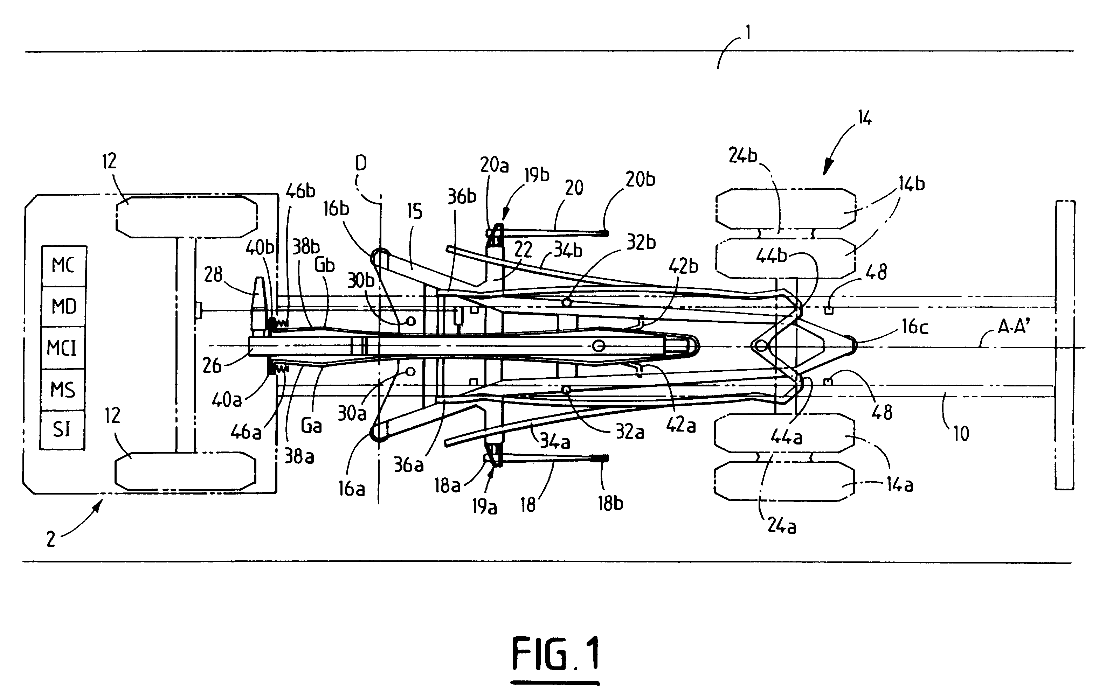

Les figures 1, 3, 4 et 5 montrent un appareil de mesure de la déflexion d'une chaussée 1 associé à un véhicule 2. Ce véhicule comprend un châssis 10, des roues avant 12, et un essieu arrière de charge 14 présentant deux paires de roues arrière 14a et 14b. L'appareil est destiné à mesurer la déflexion de la chaussée 1, c'est-à-dire l'abaissement de son niveau sous l'effet du passage de l'essieu arrière de charge 14, qui est par exemple chargé à 13 tonnes.

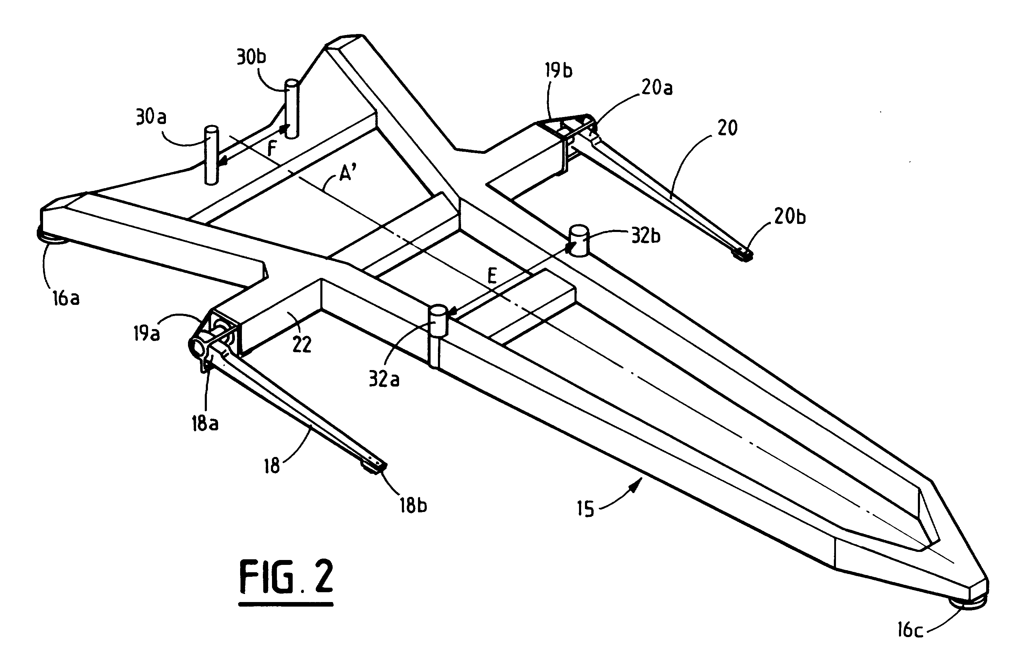

L'appareil de mesure de la déflexion comporte un chariot 15 représenté en perspective sur la figure 2. Ce chariot 15 repose sur la chaussée 1 par l'intermédiaire de deux appuis avant 16a et 16b et d'un appui arrière 16c. Ces trois appuis définissent un plan de référence. Les appuis avant 16a et 16b sont disposés de part et d'autre de l'axe longitudinal A du châssis 10, tandis que l'appui arrière 16c est sensiblement situé sur cet axe A. Ces trois appuis sont munis de patins (non référencés), qui doivent réaliser un compromis entre un bon coefficient de frottement sur la chaussée, un coefficient d'amortissement sonore et vibratoire élevé et une résistance à l'abrasion satisfaisante. Des patins en matériau plastique ou à base de caoutchouc permettent de réaliser un tel compromis.

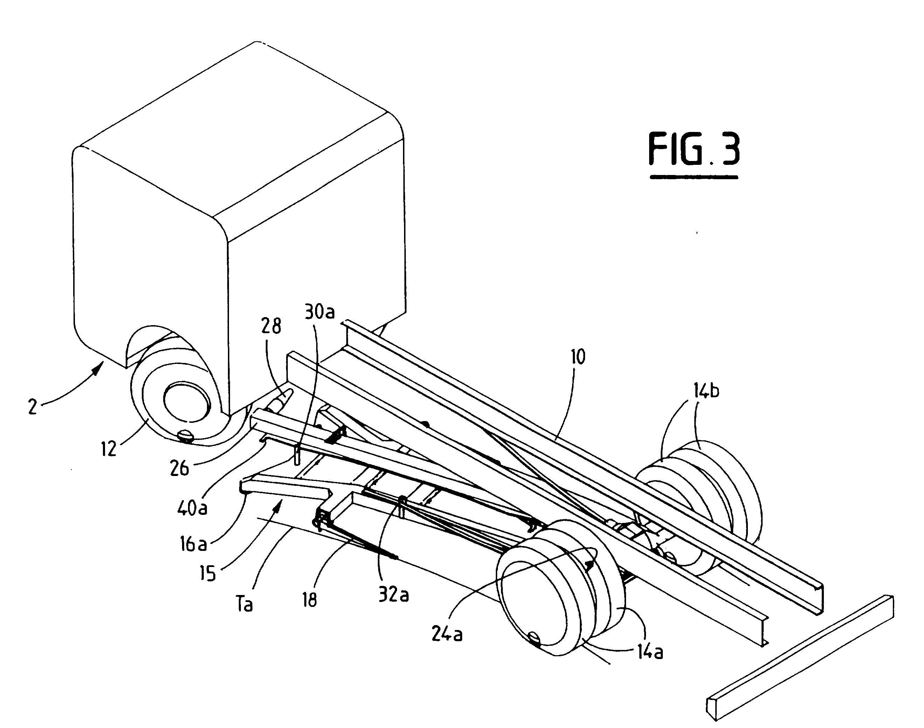

L'appareil est également muni de moyens de détermination de la déflexion de la chaussée qui comprennent deux bras palpeurs 18 et 20 montés pivotants par leurs extrémités avant 18a et 20a sur une partie intermédiaire du chariot 15, autour d'un axe 22 transversal à ce chariot, et qui reposent sur la chaussée 1 par leurs extrémités arrière 18b et 20b munies de patins. Ces extrémités arrière sont respectivement placées sur les trajectoires d'avancement des entraxes 24a et 24b de chaque paire de roues arrière 14a et 14b. Pour la clarté des dessins, seule la trajectoire Ta de l'entraxe 24a est indiquée sur la figure 3. Ainsi, les extrémités arrière des bras palpeurs 18 et 20 sont susceptibles de pénétrer entre chaque paire de roues arrière au-delà de l'aplomb de leurs entraxes 24a et 24b. Les moyens de détermination comprennent en outre des moyens de calcul de la déflexion de la chaussée en fonction de l'attitude des bras palpeurs et sont associés à des moyens de stockage des valeurs calculées. Pour la clarté des dessins, ces moyens sont très schématiquement représentés sous les références MC et MS sur les figures 1, 4 et 5.

L'appareil comporte en outre des moyens 26 de déplacement du chariot 15 associés à des moyens de commande 28. Ces moyens de commande 28 comprennent un moteur très schématiquement représenté sur les figures. Ils ont pour rôle de libérer le chariot 15 avant chaque cycle de mesure et de ramener ce chariot vers l'avant du véhicule à une vitesse par rapport au sol supérieure à celle de ce véhicule après chaque cycle de mesure. Selon le pas de mesure désiré, et donc selon la longueur des intervalles entre chaque cycle de mesure, les moyens de commande peuvent également retenir le chariot 15 à l'avant du véhicule entre deux cycles de mesure. Ceci peut par exemple être réalisé en laissant le moteur 28 légèrement sous tension.

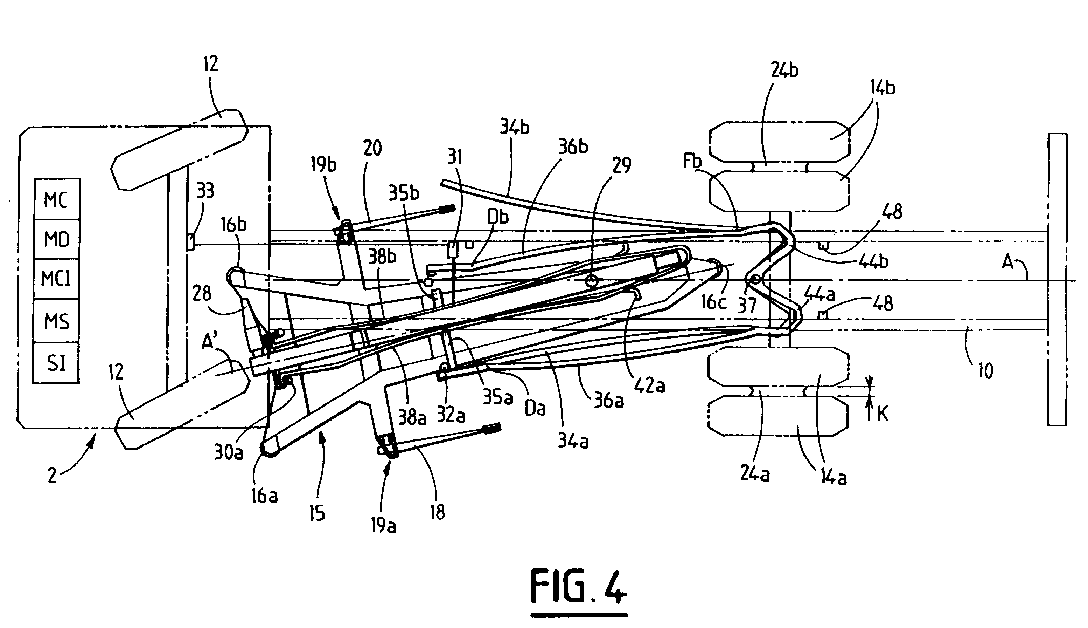

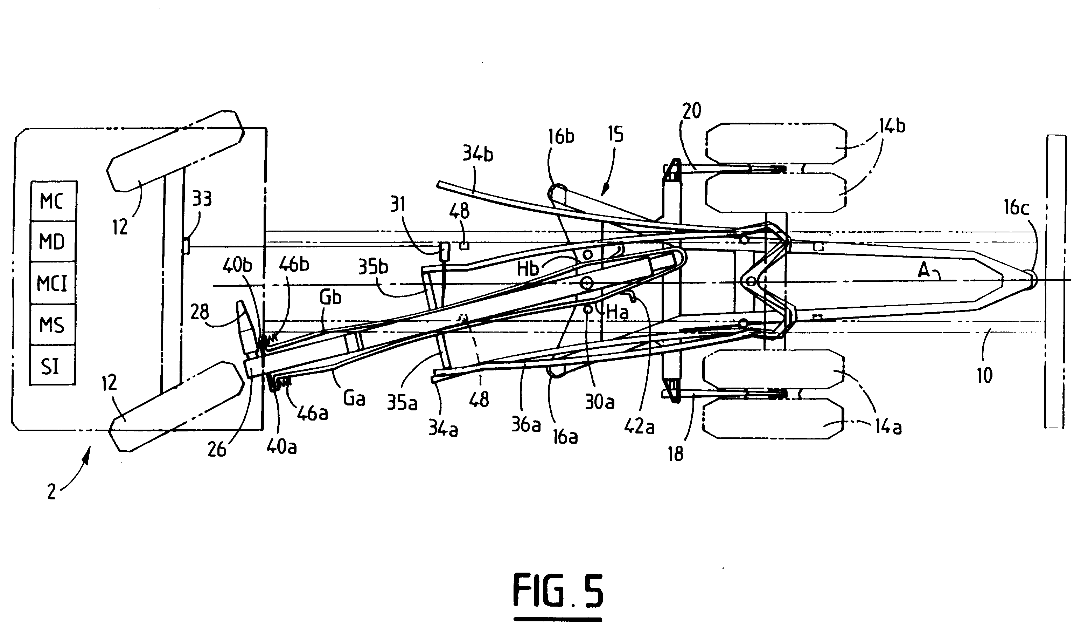

Les deux appuis avant 16a et 16b sont disposés à l'avant du chariot 15 et déterminent une droite D perpendiculaire à l'axe longitudinal A' dudit chariot. L'appui arrière 16c est, dès le début de chaque cycle de mesure, placé en arrière de l'essieu arrière 14. Cette position de l'appui arrière est particulièrement visible sur la figure 1 qui représente l'appareil et le véhicule au début d'un cycle de mesure en ligne droite. La figure 4 montre, en virage, la position du chariot par rapport au véhicule avant un cycle de mesure ou entre deux cycles de mesure, on voit sur cette figure que l'appui arrière 16c peut être durant cette période placé à l'avant de l'essieu arrière. Sur la figure 5, qui illustre la position du chariot par rapport au véhicule vers la fin d'un cycle de mesure effectué en virage, l'appui arrière 16c est situé très en arrière de l'essieu arrière 14.

L'appareil comporte des moyens de guidage du chariot destinés à le guider en fonction du rayon de braquage du véhicule 2 en empêchant tout écrasement des bras palpeurs 18, 20 par les roues arrière 14a, 14b. L'effet de ces moyens de guidage est particulièrement visible aux figures 4 et 5.

Ces moyens de guidage comportent avantageusement des galets faisant saillie à partir de la face supérieure du chariot 15 et, comme on le voit mieux sur la figure 2, disposés par paires de part et d'autre de l'axe longitudinal A' de ce chariot et dans un plan perpendiculaire à cet axe A'. Ces galets comprennent au moins une paire de galets avant 30a et 30b et une paire de galets arrière 32a et 32b. Les moyens de guidage comportent en outre des éléments allongés de guidage de ces galets, particulièrement visibles aux figures 1, 4 et 5. Au moins une partie de ces éléments allongés de guidage est susceptible de pivoter en fonction du braquage des roues avant du véhicule. Bien entendu, lorsque, comme sur la figure 1, le véhicule est en ligne droite, les divers moyens de guidage n'agissent plus sur le guidage du chariot, de sorte que l'axe longitudinal A' de ce dernier est confondu avec l'axe longitudinal A du châssis 10 et véhicule 2.

Sur la figure 4, on voit que dans un virage, l'axe longitudinal A' du chariot 15 se trouve incliné par rapport à l'axe longitudinal A du châssis 10, lorsque le chariot est en butée avant. Ceci est également vrai durant le début des cycles de mesure, ce n'est qu'au moment du passage au droit de l'essieu arrière, représenté à la figure 5, que les axes A et A' seront à nouveau superposés.

Les éléments allongés de guidage comprennent avantageusement deux guides arrière fixes 34a et 34b et deux guides arrière mobiles 36a et 36b. Ces guides arrière s'étendent à l'extérieur des galets arrière 32a et 32b vers l'arrière du chariot 15. Les guides arrière mobiles 36a et 36b s'étendent approximativement longitudinalement et sont mobiles en pivotement en fonction du braquage des roues avant 12. Les guides arrière fixes 34a et 34b présentent des parties arrière sensiblement parallèles à l'axe longitudinal A' du chariot 15 et des parties avant divergentes qui déterminent le déplacement angulaire maximal des galets arrière 32a et 32b.

Ces éléments allongés de guidage comportent en outre des guides avant qui comprennent des surfaces de guidage 38a et 38b approximativement longitudinales, s'étendant entre les galets avant 30a et 30b et mobiles en pivotement en fonction du rayon de braquage du véhicule 2.

Les moyens de commande en pivotement des guides avant en fonction du rayon de braquage du véhicule sont très schématiquement représentés sous les références 31 et 33 aux figures 4 et 5. La référence 33 désigne des moyens de détermination du rayon de braquage du véhicule 2, mécaniques ou autres, par exemple constitués par des codeurs, qui transmettent le rayon de braquage à un dispositif 31 d'actionnement en pivotement des guides avant. Ce dispositif 31 est par exemple constitué par un vérin. Pour la clarté des figures, il est représenté entre un des éléments du châssis et les guides avant. La position de ce vérin n'est qu'illustrative, mais il est évident qu'il actionne en pivotement les guides avant non seulement dans le sens indiqué sur les figures 4 et 5 mais aussi en sens contraire.

Le braquage est également transmis aux guides arrière mobiles 36a et 36b. A cet effet, des pièces 35a et 35b en forme de U renversé, représentées en vue de dessus sur les figures 1, 4 et 5, relient les surfaces de guidage 38a, 38b à ces guides arrière mobiles 36a, 36b. La forme en U renversé permet le libre passage des galets (voir la partie arrachée de la pièce 35b sur la figure 4) lorsque le véhicule et le chariot se déplacent l'un par rapport à l'autre. On peut évidemment n'utiliser qu'une seule pièce en U renversé, située entre l'un des guides arrière mobiles, par exemple 36a, et l'une des surfaces de guidage, par exemple 38a.

Il est également possible d'utiliser d'autres moyens, par exemple non mécaniques, de transmission du braquage aux moyens de guidage mobiles.

Les surfaces de guidage 38a, 38b des guides avant pivotent autour d'un pivot 29 placé vers leur partie arrière. De même, les guides arrière mobiles 36a, 36b pivotent autour d'un pivot 37 également situé vers leur partie arrière.

Les guides arrière mobiles 36a et 36b présentent avantageusement des parties avant dont l'écartement correspond sensiblement à l'écartement E des galets arrière 32a, 32b en un point de fin de stabilisation Da, Db. A partir de ce point de fin de stabilisation et jusqu'à un point de reprise en charge Fa et Fb, ces guides arrière mobiles présentent des parties arrière dont l'écartement croît puis décroît en revenant sensiblement à l'écartement E des galets arrière au point de reprise en charge. Réciproquement, les surfaces de guidage 38a et 38b des guides avant présentent une partie avant dont l'écartement est sensiblement égal à l'écartement F des galets avant 30a et 30b en un point de fin de stabilisation Ga, Gb. A partir de ce point de fin de stabilisation et jusqu'à un point de reprise en charge Ha, Hb, ces surfaces de guidage présentent des parties arrière dont l'écartement décroît puis croît en revenant sensiblement à l'écartement F des galets avant 30a et 30b en ce point de reprise en charge Ha, Hb.

Cette disposition particulière permet d'adopter différentes phases lorsque le chariot 15 est libéré par ses moyens de déplacement. En effet, ce chariot est libéré dans une position où les galets avant 30a, 30b, sont situés en regard des parties avant des surfaces de guidage 38a, 38b des guides avant et/ou les galets arrière 32a, 32b, sont situés en regard des parties avant des guides arrière 34a, 34b, 36a, 36b. Dans un premier temps, lorsque le chariot est libéré, les différents guides viennent au contact des galets pour stabiliser la poutre et la positionner correctement. La position de la poutre est correcte lorsque les galets se trouvent au niveau des points de fin de stabilisation. Ensuite, le cycle de mesure commence et les galets ne doivent pas venir au contact de leurs guides. C'est pourquoi il est avantageux que l'écartement des surfaces de guidage avant décroîsse et que celui des guides arrière mobiles croisse. Les mesures commencent dans la position représentée à la figure 1, c'est-à-dire lorsque les galets sont situés sensiblement en arrière des points de fin de stabilisation. Après la fin de la mesure, le chariot est repris en guidage aux points de reprise en charge, où les galets touchent à nouveau leurs guides. Le dernier point de mesure correspond de préférence à une position des galets légèrement en avant de ces points de reprise en charge, pour éviter que la mesure ne se trouve perturbée par le contact entre les galets et leurs guides. Le chariot 15 est ensuite ramené vers l'avant et un nouveau cycle de mesure peut recommencer. La sécurité vis-à-vis de l'écrasement des bras palpeurs par les roues arrière 14a et 14b est garantie par le fait que, dans une position donnée du chariot par rapport au guide, la distance entre ces guides et les galets est au plus égale à l'espacement K des roues de chaque paire de roues arrière. Cette position donnée du chariot correspond à la position de ce chariot à un instant donné à partir du moment où celui-ci se trouve libéré. Ainsi, à tout moment, le débattement maximal des extrémités arrière des bras palpeurs est au plus égal à l'écartement K de chaque paire de roues arrière 14a et 14b, de sorte que ces extrémités des bras palpeurs se situent toujours sur les trajectoires des entraxes de ces roues. Cette précaution permet même d'effectuer des mesures en arrière de l'aplomb de l'essieu arrière 14.

Les figures 4 et 5 montrent le véhicule en position de braquage maximal, dans laquelle la partie avant du guide arrière mobile 36a se superpose à la partie avant du guide arrière fixe 34a.

L'appareil comporte avantageusement un ensemble de butée comprenant des moyens de butée avant pour déterminer la position d'extrême avancement du chariot par rapport au véhicule, illustrée par la figure 4, et des moyens de butée arrière pour déterminer la position d'extrême recul de ce chariot par rapport au véhicule. Cette position d'extrême recul se situe légèrement en arrière de la position représentée à la figure 5, qui correspond au moment où les extrémités arrière des bras palpeurs se trouvent à l'aplomb des entraxes des paires de roues arrière.

Selon un mode préféré de réalisation, les moyens de déplacement comprennent un rail médian de traction 26 s'étendant longitudinalement. Dans ce cas, comme on le voit sur les figures, les guides avant peuvent être constitués par des éléments latéraux solidaires des côtés de ce rail de traction. Ledit rail de traction 26 est alors également mobile en pivotement en fonction du rayon de braquage des roues avant autour du pivot 29.

Dans ce mode de réalisation, les moyens de butée avant comprennent au moins un élément de butée avant solidaire du rail de traction 26 et placé vers sa partie avant. Dans l'exemple représenté, ces moyens de butée avant comprennent deux éléments de butée avant 40a et 40b s'étendant de part et d'autre du rail médian de traction 26 et vers sa partie avant. Les moyens de butée avant comprennent également une surface de butée avant constituée par la face avant d'au moins l'un des galets avant 30a et 30b. Ainsi, au moins l'un de ces galets est susceptible de venir au contact de l'élément de butée avant pour déterminer la position d'extrême avancement du chariot par rapport au véhicule. On voit donc que les galets avant peuvent remplir une fonction à la fois pour le guidage du chariot et pour définir sa position de butée avant.

Ils peuvent également être mis à contribution pour définir la position de butée arrière. En effet, les moyens de butée arrière peuvent comprendre au moins un élément de butée arrière 42a ou 42b fixe par rapport aux guides avant 38a et 38b, placé vers leur partie arrière, et destiné à retenir au moins l'un des galets avant 30a, 30b pour définir la position d'extrême recul du chariot. Dans l'exemple représenté, deux éléments de butée arrière 42a et 42b sont indiqués.

De façon complémentaire ou alternative, les galets arrière peuvent être eux aussi mis à contribution pour définir la position d'extrême recul du chariot. A cet effet, les moyens de butée arrière peuvent comprendre au moins un organe de butée arrière 44a, 44b sensiblement situé au niveau de l'essieu arrière 14 et destiné à retenir au moins l'un des galets arrière 32a et 32b.

Pour faciliter le freinage du chariot lors de son immobilisation soit en butée avant, soit en butée arrière, l'ensemble de butée peut être associé à des amortisseurs du choc du chariot. Dans l'exemple représenté, des amortisseurs 46a et 46b sont seulement associés au moyen de butée avant, mais il est possible de prévoir des amortisseurs similaires associés au moyen de butée arrière.

Les moyens de butée avant 40a et 40b peuvent comprendre un système restituteur d'énergie qui, dans l'exemple représenté, est directement associé aux amortisseurs 46a et 46b. Ce système restituteur d'énergie est constitué par exemple par un ressort, et destiné lorsque le chariot 15 est libéré avant un cycle de mesure, à restituer l'énergie emmagasinée lors du choc des moyens de butée avant 40a, 40b, 30a, 30b. Ce système restituteur d'énergie permet donc d'accélérer le positionnement et la stabilisation du chariot lorsque celui-ci est libéré par rapport au véhicule.

Les moyens 28 de commande des moyens 26 de déplacement du chariot 15 comprennent avantageusement des moyens de détermination automatique des séquences de déplacement et de libération du chariot 15 sur la chaussée 1 associés à des capteurs de position 48. Ces capteurs de position 48 peuvent être répartis le long du châssis 10 du véhicule et transmettent la position du chariot aux moyens de commande de son déplacement qui sont actionnés en conséquence. En fait, un même système informatique peut à la fois gérer l'acquisition de la mesure ainsi que les séquences de traction, de dépose et de récupération du chariot.

Selon un mode préféré de réalisation, les moyens de calcul de la déflexion de la chaussée comprennent des codeurs rotatifs 19a et 19b destinés à mesurer le degré de pivotement des bras palpeurs 18 et 20, et des moyens MC de détermination du déplacement des patins de ces bras palpeurs en fonction de ce degré de pivotement. Ces codeurs rotatifs 19a et 19b sont représentés très schématiquement sur les figures et permettent d'éviter l'étalonnage des mesures aux opérateurs. En effet, ils mesurent le pivotement des bras palpeurs entre deux instants donnés et ne nécessitent aucune mise à zéro. Ceci permet encore d'améliorer la rapidité des mesures.

L'appareil peut comporter au moins un inclinomètre destiné à déterminer le rayon de courbure de la chaussée. En effet, on peut définir l'état de la chaussée non seulement par la profondeur de la cuvette de déflexion, qui est donnée par l'intermédiaire des moyens de détermination de la déflexion précitée, mais aussi par la courbure au sommet de cette cuvette de déflexion. Il est par ailleurs également possible de prendre en compte la température de la chaussée pour le traitement des mesures, auquel cas des capteurs de température peuvent être disposés sous le véhicule.

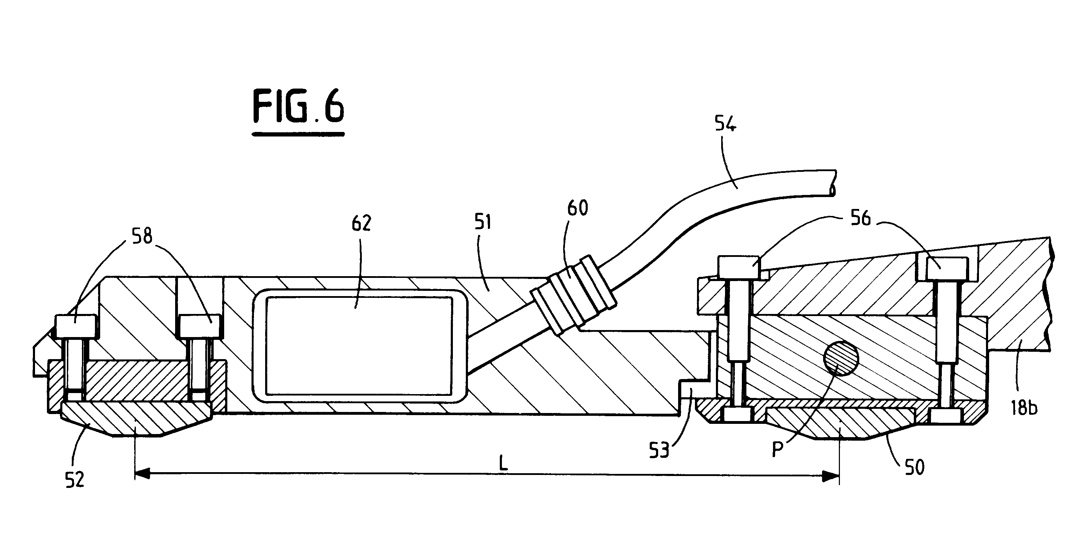

Comme le montre la figure 6, qui représente en détail l'extrémité 18b d'un bras palpeur, l'inclinomètre comporte au moins un bras articulé 51 muni d'un patin 52. Ce bras 51 est monté en pivotement autour d'un axe horizontal P, à l'extrémité arrière 18b d'un bras palpeur 18. Cette extrémité 18b est déjà munie d'un patin 50, qui est utilisé pour mesurer la déflexion, et le patin 52 du bras articulé 51 est placé à une distance L déterminée du patin 50 du bras palpeur. Evidemment, les deux patins sont de préférence alignés dans la direction longitudinale. L'inclinomètre comporte en outre des moyens de mesure MD représentés schématiquement aux figures 1, 4 et 5, pour mesurer le déplacement angulaire du patin articulé autour de son axe P de pivotement, et des moyens MCI de calcul du rayon de courbure de la chaussée 1 à partir de ce déplacement angulaire. L'inclinomètre est en outre associé à des moyens de stockage MS des valeurs calculées qui stockent, pour chaque cycle de mesure, la valeur du rayon de courbure au sommet de la cuvette de déflexion. En fait, on mesure la position verticale des patins 50 et la position verticale du patin 52. Alors, en fonction de la distance L séparant ces deux patins, on peut calculer par dérivation la courbure de la cuvette de déflexion. Le calcul se fait à partir de quelques points de mesure situés autour du droit de l'essieu arrière, à partir desquels on détermine la courbure au sommet. Le rayon de courbure est donné par l'inverse de cette courbure. Evidemment, les moyens MCI de calcul du rayon de courbure et les moyens MS de stockage des valeurs calculées peuvent faire partie du système informatique déjà cité.

La figure 6 montre l'amorce d'un câble 54 qui relie le patin articulé 52 au reste de l'appareil. Pour alléger les figures, les autres câbles qui relient entre eux les divers éléments constitutifs de l'appareil n'ont pas été représentés. Il y a bien évidemment des câbles qui relient l'extrémité des bras palpeurs au codeur rotatif, des câbles qui relient ces codeurs rotatifs aux moyens de calcul de la déflexion, et, le cas échéant, des câbles qui relient les moyens de détermination automatique des séquences de déplacement et de libération du chariot aux capteurs de position 48 et aux moyens 28 de commande des moyens de déplacement du chariot. Précisément dans le but de faciliter le déplacement de ce chariot, le déplacement des différents câbles est assuré par le système de traction du chariot, ce qui permet de pratiquement annuler les efforts passant par ces câbles et appliqués au chariot. Ceci permet donc d'éviter d'éventuelles perturbations des mesures par les câbles de traction et de transmission de données.

Comme on le voit toujours sur la figure 6, le bras articulé 51 peut être amovible. On peut ainsi à volonté, soit mesurer seulement la profondeur de la cuvette de déflexion, soit mesurer également le rayon de courbure de cette cuvette. On peut bien évidemment mettre en oeuvre les moyens de détermination de la déflexion et l'inclinomètre simultanément ou séparément les uns des autres.

En fait, comme on le constate sur la figure 6, le patin articulé 52 peut être monté à l'extrémité arrière d'un bras articulé 51 lui-même monté par exemple au moyen d'une fourche 53 et d'une vis d'axe P sur l'extrémité 18b du bras palpeur 18. Comme on l'a indiqué précédemment, le patin articulé ou plus précisément le bras articulé 51 peut être amovible et peut être retiré simplement en dévissant la vis d'axe P tandis que le câble 54 peut être branché ou retiré au moyen d'une connexion 60. La référence 62 désigne une cellule de mesure de l'inclinaison du bras articulé 51.

Les patins 52 et 50 sont des pièces soumises à l'usure, il est donc évidemment préférable que ces pièces soient susceptibles d'être changées. A cet effet, le patin 52 est fixable à l'extrémité du bras articulé 51 par l'intermédiaire de vis 58, tandis que le patin 50 est fixé à l'extrémité 18b du bras palpeur 18 par l'intermédiaire de vis 56. Ces modes de fixation des patins 50 et 52 sont bien visibles sur la figure qui représente l'extrémité 18b du bras palpeur et le bras articulé 51 vus en coupe.

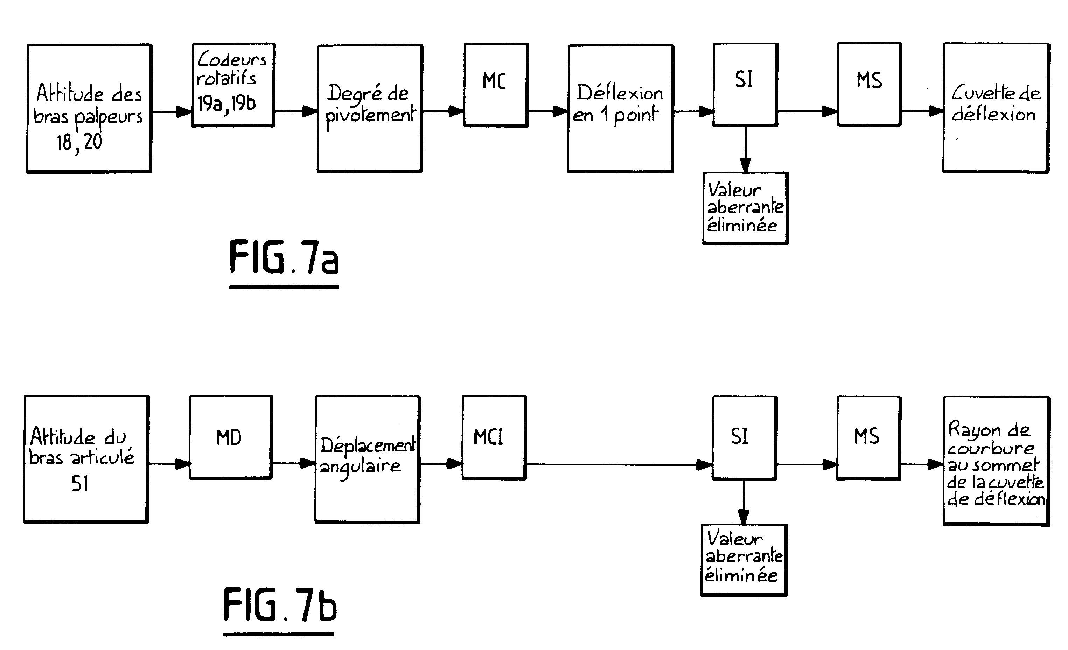

La figure 7 comporte une première partie 7a qui présente un organigramme de mesure de la déflexion et une seconde partie 7b qui présente un organigramme de mesure des rayons de courbure de la cuvette de déflexion. Les mesures se déroulent à vitesse constante du véhicule 2. Dans un premier temps, les moyens de déplacement du chariot libèrent ce dernier sur la chaussée. Le véhicule avance ensuite par rapport à ce chariot pour lui laisser le temps de se stabiliser et d'amortir les vibrations. A partir d'un point de début de mesure, des mesures commencent et se terminent en un point de fin de mesure. Après ce point de fin de mesure, le chariot est récupéré en butée arrière, puis ramené vers l'avant du véhicule jusqu'à une position de butée avant par ses moyens de déplacement. Comme on l'a vu précédemment, les moyens de déplacement peuvent être gérés par un système informatique qui reçoit les données de capteurs de position 48. On effectue par exemple une mesure tous les 2 centimètres environ pendant un cycle de mesure. Le pas des cycles de mesure peut être de 10 mètres, c'est-à-dire que ces derniers se répètent tous les 10 mètres, pour une vitesse d'avancement du véhicule de 10 kilomètres par heure. Il est également possible de faire un pas de mesure de 5 mètres pour une vitesse constante d'avancement de 3,5 km/heure.

Lors d'un cycle de mesure, la détermination de la déflexion s'effectue de la manière suivante, illustrée par l'organigramme de la figure 7a. Les codeurs rotatifs 19a et 19b reconnaissent l'attitude des bras palpeurs 18 et 20 tous les 2 centimètres environ. Ces codeurs rotatifs 19a et 19b déterminent donc le degré de pivotement des bras palpeurs tous les 2 centimètres. Les moyens de calcul MC déterminent alors le déplacement des patins 50 en fonction de ce degré de pivotement. Ceci donne la déflexion de la chaussée tous les 2 centimètres. Pour chaque point de mesure, le système informatique SI peut être mis en oeuvre à la manière d'un filtre pour éliminer les valeurs jugées aberrantes à partir de tests prédéfinis. Les valeurs qui seront jugées acceptables seront alors stockées par les moyens de stockage MS et l'ensemble de ces valeurs donneront la profondeur de la cuvette de déflexion tous les 2 centimètres.

Par référence à l'organigramme de la figure 7b, on décrit maintenant la détermination du rayon de courbure au sommet de la cuvette de déflexion. Les moyens de mesure MD reconnaissent l'attitude angulaire du bras articulé 51 muni du patin 52, ceci sur quelques points situés autour du droit de l'essieu arrière. Ces moyens de mesure MD qui peuvent par exemple être associés aux codeurs rotatifs précités, déterminent alors le déplacement angulaire du bras articulé 51. Les moyens de calcul MCI sont alors mis en oeuvre pour calculer la courbure en ces quelques points, moyenner les résultats obtenus pour en déduire la courbure au sommet, et inverser cette courbure pour obtenir le rayon de courbure au sommet. Comme on l'a indiqué précédemment, ces moyens de calcul déterminent la courbure à partir de l'inclinaison du bras articulé 51 et de la distance L séparant le patin 50 de l'extrémité 18b du bras palpeur du patin 52 de l'extrémité arrière du bras articulé 51. Les résultats de la courbure en les quelques points de mesure peuvent passer à travers le filtre constitué par le système informatique SI qui éliminera les valeurs jugées aberrantes à partir de tests prédéfinis. Les valeurs jugées acceptables seront alors prises en compte pour le calcul de la courbure au sommet de la cuvette de déflexion. Les moyens de stockage MS stockent une valeur du rayon de courbure pour chaque cycle de mesure.

Il est évident que les différents moyens de calcul MC et MCI, le système informatique SI et les moyens de stockage MS peuvent faire partie d'un logiciel de gestion informatique global. Par ailleurs, comme on l'a dit précédemment, ce logiciel de gestion informatique peut également gérer les séquences de dépose/repose du chariot sur la chaussée en fonction des données transmises par les capteurs de position 48. Les divers moyens informatiques sont de préférence embarqués dans le véhicule.

## Revendications

1. Appareil de mesure de la déflexion d'une chaussée (1), associé à un véhicule (2) comprenant un châssis (10), des roues avant (12) et un essieu arrière (14) de charge présentant deux paires de roues arrière (14a, 14b), l'appareil étant destiné à mesurer la déflexion de la chaussée (1) sous l'effet du passage dudit essieu arrière de charge (14) et comprenant :
- un chariot (15) reposant sur la chaussée (1) par l'intermédiaire de deux appuis avant (16a, 16b) et d'un appui arrière (16c) définissant un plan de référence, les appuis avant (16a, 16b) étant disposés de part et d'autre de l'axe longitudinal (A') du chariot (15) et l'appui arrière (16c) étant sensiblement situé sur ledit axe (A'),
- des moyens de détermination de la déflexion de la chaussée comprenant deux bras palpeurs (18, 20) montés pivotants par leurs extrémités avant (18a, 20a) sur une partie intermédiaire du chariot (15), autour d'un axe (22) perpendiculaire à l'axe longitudinal (A') dudit chariot (15), et reposant sur la chaussée (1) par leurs extrémités arrière (18b, 20b) munies de patins (50), respectivement placées sur les trajectoires d'avancement des entraxes (24a, 24b) de chaque paire de roues arrière (14a, 14b) et susceptibles de pénétrer entre lesdites roues de chaque paire au-delà de l'aplomb desdits entraxes (24a, 24b), lesdits moyens de détermination comprenant en outre des moyens de calcul (MC, 19a, 19b) de la déflexion de la chaussée en fonction de l'attitude des bras palpeurs (18, 20) et étant associés à des moyens de stockage (MS) des valeurs calculées,
- des moyens (26) de déplacement du chariot (15) associés à des moyens de commande (28), pour libérer le chariot (15) avant chaque cycle de mesure et pour ramener ledit chariot vers l'avant à une vitesse par rapport au sol supérieure à celle du véhicule (2) après chaque cycle de mesure,
caractérisé en ce que les deux appuis avant (16a, 16b) sont disposés à l'avant du chariot (15) et déterminent une droite (D) perpendiculaire à l'axe longitudinal (A') dudit chariot, tandis que l'appui arrière (16c) est destiné à être placé en arrière dudit essieu arrière (14) dès le début de chaque cycle de mesure,
en ce qu'il comprend des moyens de guidage (30a, 30b, 32a, 32b, 34a, 34b, 36a, 36b, 38a, 38b) du chariot (15) destinés à guider ledit chariot en fonction du rayon de braquage du véhicule (2) en empêchant tout écrasement des bras palpeurs (18, 20) par les roues arrière (14a, 14b), ces moyens de guidage du chariot comportant :
- des galets (30a, 30b, 32a, 32b) faisant saillie à partir de la face supérieure du chariot (15) et disposés par paires de part et d'autre de l'axe longitudinal (A') de ce chariot et dans un plan perpendiculaire audit axe, comprenant au moins une paire de galets avant (30a, 30b) et une paire de galets arrières (32a, 32b), et
- des éléments allongés de guidage (34a, 34b, 36a, 36b, 38a, 38b) desdits galets, dont une partie au moins est susceptible de pivoter en fonction du braquage des roues avant du véhicule.

2. Appareil selon la revendication 1, caractérisé en ce que les éléments allongés de guidage comprennent deux guides arrières fixes (34a, 34b) et deux guides arrières mobiles (36a, 36b) s'étendant, à l'extérieur des galets arrières (32a, 32b), vers l'arrière du chariot (15), les guides arrières mobiles (36a, 36b) s'étendant approximativement longitudinalement et étant mobiles en pivotement en fonction du braquage des roues avant (12) et les guides arrières fixes (34a, 34b) présentant des parties arrières sensiblement parallèles à l'axe longitudinal (A') du chariot (15) et des parties avant divergentes, déterminant le déplacement angulaire maximal des galets arrières (32a, 32b), et
en ce que lesdits éléments allongés de guidage comportent en outre des guides avant comprenant des surfaces de guidage (38a, 38b) approximativement longitudinales s'étendant entre les galets avant (30a, 30b) et mobiles en pivotement en fonction du rayon de braquage du véhicule (2).

3. Appareil selon la revendication 2, caractérisé en ce que les guides arrière mobiles (36a, 36b) présentent des parties avant dont l'écartement correspond sensiblement à l'écartement (E) des galets arrière (32a, 32b) en un point de fin de stabilisation (Da, Db) et, à partir dudit point de fin de stabilisation jusqu'à un point de reprise en charge (Fa, Fb), des parties arrières dont l'écartement croît puis décroît en revenant sensiblement à l'écartement (E) des galets arrière au point de reprise en charge, et
en ce que les surfaces de guidage (38a, 38b) des guides avant présentent une partie avant dont l'écartement est sensiblement égal à l'écartement (F) des galets avant (30a, 30b) en un point de fin de stabilisation (Ga, Gb) et, à partir dudit point de fin de stabilisation jusqu'à un point de reprise en charge (Ha, Hb), des parties arrière dont l'écartement décroît puis croit en revenant sensiblement à l'écartement (F) des galets avant (30a, 30b) audit point de reprise en charge.

4. Appareil selon l'une quelconque des revendications 1 à 3, caractérisé en ce que, dans une position donnée du chariot par rapport aux guides, la distance entre ces guides (34a, 34b, 36a, 36b, 38a, 38b) et les galets (30a, 30b, 32a, 32b) est au plus égale à l'espacement (K) des roues de chaque paire de roues arrière (14a, 14b).

5. Appareil selon l'une quelconque des revendications 1 à 4, caractérisé en ce qu'il comporte un ensemble de butée comprenant des moyens de butée avant (40a, 40b, 30a, 30b) pour déterminer la position d'extrême avancement du chariot par rapport au véhicule et des moyens de butée arrière pour déterminer la position d'extrême recul du chariot par rapport au véhicule.

6. Appareil selon la revendication 5, caractérisé en ce que les moyens de déplacement comprennent un rail médian de traction (26) s'étendant longitudinalement, et
en ce que les moyens de butée avant comprennent au moins un élément de butée avant (40a, 40b) solidaire du rail de traction (26) et placé vers sa partie avant, et une surface de butée avant constituée par la face avant des galets avant (30a,30b).

7. Appareil selon la revendication 6, caractérisé en ce que les moyens de butée arrière comprennent au moins un élément de butée arrière (42a, 42b) fixe par rapport aux guides avant (38a, 38b), placé vers leur partie arrière, et destiné à retenir au moins l'un des galets avant (30a, 30b) pour définir la position d'extrême recul du chariot.

8. Appareil selon l'une quelconque des revendications 5 à 7, caractérisé en ce que les moyens de butée arrière comprennent au moins un organe de butée arrière (44a, 44b) sensiblement situé au niveau de l'essieu arrière (14), et destiné à retenir au moins l'un des galets arrières (32a, 32b) pour définir la position d'extrême recul du chariot.

9. Appareil selon l'une quelconque des revendications 5 à 8, caractérisé en ce que l'ensemble de butée est associé à des amortisseurs (46a, 46b) du choc du chariot (15).

10. Appareil selon l'une quelconque des revendications 5 à 9, caractérisé en ce que les moyens de butée avant (40a, 40b) comprennent un système restituteur d'énergie (46a, 46b) destiné, lorsque le chariot (15) est libéré avant un cycle de mesure, à restituer l'énergie emmagasinée lors du choc des moyens de butée avant (40a, 40b, 30a, 30b).

11. Appareil selon l'une quelconque des revendications 1 à 10, caractérisé en ce que les moyens (28) de commande des moyens (26) de déplacement du chariot (15) comprennent des moyens de détermination automatique des séquences de déplacement et de libération du chariot (15) sur la chaussée associés à des capteurs de position (48).

12. Appareil selon l'une quelconque des revendications 1 à 11, caractérisé en ce que les moyens (MC, 19a, 19b) de calcul de la déflexion de la chaussée comprennent des codeurs rotatifs (19a, 19b) destinés à mesurer le degré de pivotement des bras palpeurs (18, 20) et des moyens (MC) de détermination du déplacement des patins en fonction de ce degré de pivotement.

13. Appareil selon l'une quelconque des revendications 1 à 12, caractérisé en ce qu'il comporte au moins un inclinomètre (52, MD, MCI) destiné à déterminer le rayon de courbure de la chaussée au sommet de la cuvette de déflexion.

14. Appareil selon la revendication 13, caractérisé en ce que l'inclinomètre comporte au moins :
- un bras articulé (51) monté en pivotement autour d'un axe horizontal (P), à l'extrémité arrière (18b) d'un bras palpeur (18), ledit bras articulé (51) étant muni d'un patin (52) prévu à une distance (L) déterminée du patin (50) dudit bras palpeur,
- des moyens de mesure (MD) du déplacement angulaire de ce bras articulé (51) autour de son axe (P) de pivotement, et
- des moyens (MCI) de calcul de la courbure de la chaussée (1) à partir de ce déplacement angulaire et du rayon de courbure au sommet de la cuvette de déflexion, cet inclinomètre étant en outre associé à des moyens de stockage (MS) des valeurs calculées.

15. Appareil selon la revendication 14, caractérisé en ce que le bras articulé (51) est amovible.

16. Appareil selon l'une quelconque des revendications 13 à 15, caractérisé en ce que les moyens de détermination de la déflexion et l'inclinomètre sont mis en oeuvre simultanément.

17. Appareil selon l'une quelconque des revendications 1 à 16, caractérisé en ce qu'il est associé à un système informatique (SI) destiné à éliminer des valeurs calculées aberrantes.

## Claims

1. Apparatus for measuring the deflection of a roadway (1), the apparatus being associated with a vehicle (2) comprising a chassis (10), front wheels (12), and a load-carrying back axle (14) having two pairs of back wheels (14a, 14b), the apparatus being designed to measure the deflection of the roadway (1) under the effect of said load-carrying back axle (14) passing thereover, the apparatus comprising :
a carriage (15) resting on the roadway (1) via two front support points (16a, 16b) and a back support point (16c) thereby defining a reference plane, the front support points (16a, 16b) being disposed on either side of the longitudinal axis (A') of the carriage (15) while the back support point (16c) is substantially situated on said axis (A');
determining means for determining the deflection of the roadway, the determining means comprising two feeler arms (18, 20) pivotally mounted at their front ends (18a, 20a) to an intermediate portion of the carriage (15) about an axis (22) that is perpendicular to the longitudinal axis (A') of said carriage (15), and resting on the roadway (1) via their back ends (18b, 20b) that are provided with skids (50) respectively placed on the paths over which the gaps (24a, 24b) between each pair of back wheels (14a, 14b) advance and capable of penetrating between said wheels of said pairs to behind a position vertically below said gaps (24a, 24b), said determining means further comprising computer means (MC, 19a, 19b) for computing the deflection of the roadway as a function of the attitude of the feeler arms (18, 20) and associated with storage means (MS) for storing the computed values; and
means (26) for displacing the carriage (15) associated with control means (28) for releasing the carriage (15) before each measurement cycle and, at the end of each measurement cycle, for returning said carriage forwards at a speed relative to the ground that is greater than the speed of the vehicle (2);
characterised in that the two front support points (16a, 16b) are disposed at the front of the carriage (15) and define a straight line (D) perpendicular to the longitudinal axis (A') of said carriage, while the back support point (16c) is designed to be placed, at the beginning of each measurement cycle, behind said back axle (14);
in that it comprises guide means (30a, 30b, 32a, 32b, 34a, 34b, 36a, 36b, 38a, 38b) for guiding the carriage (15) designed to guide said carriage as a function of the tuming circle radius of the vehicle (2) to prevent the feeler arms (18, 20) being crushed by the back wheels (14a, 14b), said carriage guide means comprising :
rolls (30a, 30b, 32a, 32b) projecting from the top face of the carriage (15) and disposed in pairs on either side of the longitudinal axis (A') of the carriage and in planes perpendicular to said axis, comprising at least one pair of front rolls (30a, 30b) and one pair of back rolls (32a, 32b); and
elongate guide elements (34a, 34b, 36a, 36b, 38a, 38b) for said rolls, a fraction at least thereof being capable of pivoting as a function of the turning circle of the front wheels of the vehicle.

2. Apparatus according to claim 1, characterised in that the elongate guide elements comprise two fixed back guides (34a, 34b) and two mobile back guides (36a, 36b) extending outside the back rolls (32a, 32b) towards the back of the carriage (15), the mobile back guides (36a, 36b) extending approximately longitudinally and being pivotable as a function of the tuming circle of the front wheels (12), and the fixed back guides (34a, 34b) having back portions that are substantially parallel to the longitudinal axis (A') of the carriage (15) and front portions that diverge, determining the maximum angular displacement of the back rolls (32a, 32b); and
in that said elongate guide elements further include front guides comprising approximately longitudinal guide surfaces (38a, 38b) extending between the front rolls (30a, 30b) and pivotable as a function of the radius of the turning circle of the vehicle (2).

3. Apparatus according to claim 2, characterised in that the mobile back guides (36a, 36b) have front portions that are spaced apart by substantially the spacing (E) between the back rolls (32a, 32b) at an end-of-stabilization point (Da, Db), and from said end-of-stabilization point to a load-takeup point (Fa, Fb) they have back portions whose spacing increases and then decreases, returning at the load-takeup point substantially to the spacing (E) between the back rolls; and
in that the guide surfaces (38a, 38b) of the front guides have front portions that are spaced apart at an end-of-stabilization point (Ga, Gb) by a spacing that is substantially equal to the spacing (F) between the front rolls (30a, 30b), and from said end-of-stabilization point to a load-takeup point (Ha, Hb) they have back portions whose spacing decreases and than increases, retuming at the load-takeup point to substantially the spacing (F) between the front rolls (30a, 30b).

4. Apparatus according to any one of claims 1 to 3, characterised in that, in a given position of the carriage relative to the guides, the distance between the guides (34a, 34b, 36a, 36b, 38a, 38b) and the rolls (30a, 30b, 32a, 32b) is not greater than the spacing (K) between the wheels in each pair of back wheels (14a, 14b).

5. Apparatus according to any one of claims 1 to 4, characterised in that it comprises a stop assembly comprising front stop means (40a, 40b, 30a, 30b) for determining the foremost position of the carriage relative to the vehicle, and back stop means for determining the rearmost position of the carriage relative to the vehicle.

6. Apparatus according to claim 5, characterised in that the displacement means comprise a middle traction rail (26) extending longitudinally; and
in that the front stop means comprise at least one front stop element (40a, 40b) secured to the traction rail (26) and placed near its front portion, together with a front stop surface constituted by the front faces of the front rolls (30a, 30b).

7. Apparatus according to claim 6, characterised in that the back stop means comprise at least one back stop element (42a, 42b) that is fixed relative to the front guides (38a, 38b) and placed towards the back portions thereof, being designed to retain at least one of the front rolls (30a, 30b) to define the rearmost position of the carriage.

8. Apparatus according to any one of claims 5 to 7, characterised in that the back stop means comprise at least one back stop member (44a, 44b) situated substantially level with the back axle (14) and designed to retain at least one of the back rolls (32a, 32b) to define the rearmost position of the carriage.

9. Apparatus according to any one of claims 5 to 8, characterised in that the stop assembly is associated with shock absorbers (46a, 46b) for absorbing the shock of the carriage (15).

10. Apparatus according to any one of claims 5 to 9, characterised in that the front stop means (40a, 40b) comprise an energy-restoring system (46a, 46b) designed when the carriage (15) is released before a measurement cycle to restore the energy stored during the shock of the front stop means (40a, 40b, 30a, 30b).

11. Apparatus according to any one of claims 1 to 10, characterised in that the control means (28) for controlling the means (26) for displacing the carriage (15) comprise means associated with position sensors (48) and for automatically determining displacement and release sequences for the carriage (15) on the roadway.

12. Apparatus according to any one of claims 1 to 11, characterised in that the means (MC, 19a, 19b) for computing the deflection of the roadway comprise rotary encoders (19a, 19b) designed to measure the degree of pivoting of the feeler arms (18, 20) and means (MC) for determining the displacement of the skids as a function of said degree of pivoting.

13. Apparatus according to any one of claims 1 to 12, characterised in that it comprises at least one inclination indicator (52, MD, MCI) for determining the radius of curvature of the roadway at the bottom of the deflection depression.

14. Apparatus according to claim 13, characterised in that the inclination indicator comprises at least :
a hinged arm (51) pivotally mounted about a horizontal axis (P) at the back end (18b) of a feeler arm (18), said hinged arm (51) being provided with a skid (52) provided at a determined distance (L) from the skid (50) of said feeler arm;
measurement means (MD) for measuring the angular displacement of said hinged arm (51) about its pivot axis (P); and
computer means (MCI) for computing the curvature of the roadway (1) on the basis of the angular displacement, and for computing the radius of curvature at the bottom of said deflection depression, said inclination indicator being also associated with storage means (MS) for storing the computed values.

15. Apparatus according to claim 14, characterised in that the hinged arm (51) is removable.

16. Apparatus according to any one of claims 13 to 15, characterised in that the means for determining deflection and the inclination indicator are implemented simultaneously.

17. Apparatus according to any one of claims 1 to 16, characterised in that it is associated with a computer system (SI) designed to eliminate deviant computed values.

## Patentansprüche

1. Gerät zum Messen der Deformation einer Fahrbahn (1), das einem Fahrzeug (2) mit einem Fahrgestell (10), Vorderrädern (12) und einer Belastungshinterachse (14) mit zwei Paar Hinterrädern (14a, 14b) zugeordnet ist, wobei das Gerät zum Messen der Deformation der Fahrbahn (1) unter der Wirkung der Befahrung durch die genannte Belastungshinterachse (14) bestimmt ist und umfaßt:
- einen Schlitten (15), der auf der Fahrbahn (1) mit zwei vorderen Stützen (16a, 16b) und einer hinteren Stütze (16c), die eine Bezugsebene bilden, aufruht, wobei die vorderen Stützen (16a, 16b) beiderseits der Längsachse (A') des Schlittens (15) und die hintere Stütze (16c) im wesentlichen in der genannten Achse (A') angeordnet sind,
- Einrichtungen zum Bestimmen der Deformation der Fahrbahn mit zwei Fühlerarmen (18, 20), die an ihren vorderen Enden (18a, 20a) mit einem Zwischenstück des Schlittens (15) um eine zur Längsachse (A') des genannten Schlittens (15) rechtwinklige Achse (22) schwenkbar verbunden sind und auf der Fahrbahn (1) mit ihren hinteren, mit Kufen (50) versehenen Enden (18b, 20b) aufruhen, die je in der Bahn der Vorwärtsbewegung des Achszwischenraumes (24a, 24b) jedes Paares Hinterräder (14a, 14b) angeordnet sind und zwischen die genannten Räder jedes Paares über die Lotrechte der genannten Achszwischenräume (24a, 24b) hinaus einzufahren vermögen, wobei die genannten Bestimmungseinrichtungen außerdem Einrichtungen (MC, 19a, 19b) zum Berechnen der Deformation der Fahrbahn in Abhängigkeit von der Lage der Fühlerarme (18, 20) aufweisen und Einrichtungen (MS) zum Speichern der Rechenwerte zugeordnet sind,
- Einrichtungen (26) zum Verstellen des Schlittens (15), die Betätigungseinrichtungen (28) zugeordnet sind, zum Freigeben des Schlittens (15) vor jedem Meßzyklus und zum Zurückstellen des Schlittens nach vorn nach jedem Meßzyklus mit einer Geschwindigkeit in bezug auf den Boden, die größer ist als die des Fahrzeugs (2),
dadurch gekennzeichnet, daß die beiden vorderen Stützen (16a, 16b) vor dem Schlitten (15) angeordnet sind und eine zur Längsachse (A') des genannten Schlittens rechtwinklige Gerade (D) bestimmen, wogegen die hintere Stütze (16c) dazu bestimmt ist, schon ab dem Beginn jedes Meßzyklus hinter der genannten Hinterachse (14) in Stellung gebracht zu sein,
daß es Führungseinrichtungen (30a, 30b, 32a, 32b, 34a, 34b, 36a, 36b, 38a, 38b) für den Schlitten (15) aufweist, die dazu bestimmt sind, den genannten Schlitten in Abhängigkeit vom Wendekreishalbmesser des Fahrzeugs (2) zu führen und dabei zu verhindern, daß die Fühlerarme (18, 20) von den Hinterrädern (14a, 14b) überfahren werden, wobei diese Führungseinrichtungen des Schlittens umfassen:
- Rollen (30a, 30b, 32a, 32b), die aus der Oberseite des Schlittens (15) herausragen und paarweise beiderseits der Längsachse (A') dieses Schlittens und in einer zur genannten Achse rechtwinkligen Ebene angeordnet sind, wobei sie wenigstens ein vorderes Paar Rollen (30a, 30b) und ein hinteres Paar Rollen (32a, 32b) umfassen, und
- Führungsorgane (34a, 34b, 36a, 36b,. 38a, 38b) von überwiegender Längserstreckung für die genannten Rollen, von denen wenigstens ein Abschnitt in Abhängigkeit vom Lenkeinschlag der Vorderräder des Fahrzeugs schwenkbar ist.

2. Gerät nach Anspruch 1,
dadurch gekennzeichnet, daß die Führungsorgane von überwiegender Längserstreckung zwei feste hintere Führungen (34a, 34b) und zwei bewegliche hintere Führungen (36a, 36b) umfassen, die sich auf der Außenseite der hinteren Rollen (32a, 32b) zur Rückseite des Schlittens (15) erstrecken, wobei sich die beweglichen hinteren Führungen (36a, 36b) etwa in Längsrichtung erstrecken und in Abhängigkeit vom Lenkeinschlag der Vorderräder (12) schwenkbar sind und die festen hinteren Führungen (34a, 34b) zur Längsachse (A') des Schlittens (15) im wesentlichen parallele hintere Abschnitte und auseinanderlaufende vordere Abschnitte aufweisen, welche die maximale Winkelverstellung der hinteren Rollen (32a, 32b) bestimmen, und daß die genannten Führungsorgane von überwiegender Längserstreckung außerdem vordere Führungen aufweisen, die ungefähr längsgerichtete Führungsflächen (38a, 38b) umfassen, die sich zwischen den vorderen Rollen (30a, 30b) erstrecken und in Abhängigkeit vom Wendekreishalbmesser des Fahrzeugs (2) schwenkbar sind.

3. Gerät nach Anspruch 2,
dadurch gekennzeichnet, daß die beweglichen hinteren Führungen (36a, 36b) vordere Abschnitte aufweisen, deren Zwischenabstand im wesentlichen dem Zwischenabstand (E) der hinteren Rollen (32a, 32b) an einer Stelle des Stabilisierungsendes (Da, Db) entspricht, und ab der genannten Stelle des Stabilisierungsendes bis zu einer Stelle der Wiederbelastung (Fa, Fb) hintere Abschnitte aufweisen, deren Zwischenabstand zu-, dann auf im wesentlichen den Zwischenabstand (E) der hinteren Rollen an der Stelle der Wiederbelastung zurückgehend abnimmt, und
daß die Führungsflächen (38a, 38b) der vorderen Führungen vordere Abschnitte aufweisen, deren Zwischenabstand im wesentlichen gleich dem Zwischenabstand (F) der vorderen Rollen (30a, 30b) an einer Stelle des Stabilisierungsendes (Ga, Gb) ist, und ab der genannten Stelle des Stabilisierungsendes bis zu einer Stelle der Wiederbelastung (Ha, Hb) hintere Abschnitte aufweisen, deren Zwischenabstand ab-, dann auf im wesentlichen den Zwischenabstand (F) der vorderen Rollen (30a, 30b) an der genannten Stelle der Wiederbelastung zurückgehend zunimmt.

4. Gerät nach einem der Ansprüche 1 bis 3,
dadurch gekennzeichnet, daß in einer bestimmten Stellung des Schlittens relativ zu den Führungen der Abstand zwischen dieses Führungen (34a, 34b, 36a, 36b, 38a, 38b) und den Rollen (30a, 30b, 32a, 32b) höchstens gleich dem Zwischenabstand (K) der Räder jedes Paares Hinterräder (14a, 14b) ist.

5. Gerät nach einem der Ansprüche 1 bis 4,
dadurch gekennzeichnet, daß es eine Anschlag-Anordnung aufweist, die vordere Anschlageinrichtungen (40a, 40b, 30a, 30b) zum Bestimmen der Stellung der maximalen Vorwärtsverstellung des Schlittens in bezug auf das Fahrzeug und hintere Anschlag-Einrichtungen zum Bestimmen der Stellung der maximalen Rückwärtsverstellung des Schlittens in bezug auf das Fahrzeug umfaßt.

6. Gerät nach Anspruch 5,
dadurch gekennzeichnet, daß die Verstelleinrichtungen eine mittlere, längsgerichtete Zugschiene (26) aufweisen, und daß die vorderen Anschlag-Einrichtungen wenigstens ein vorderes Anschlagorgan (40a, 40b), das mit der Zugschiene (26) fest verbunden und in deren vorderem Abschnitt angeordnet ist, und eine vordere Anschlagfläche umfassen, die von der Vorderfläche der vorderen Rollen (30a, 30b) gebildet ist.

7. Gerät nach Anspruch 6,
dadurch gekennzeichnet, daß die hinteren Anschlag-Einrichtungen wenigstens ein hinteres Anschlagorgan (42a, 42b) aufweisen, das in bezug auf die vorderen Führungen (38a, 38b) fest ist, in ihrem hinteren Abschnitt angeordnet ist und dazu bestimmt ist, wenigstens eine der vorderen Rollen (30a, 30b) anzuhalten, um die Stellung der maximalen Rückwärtsverstellung des Schlittens zu definieren.

8. Gerät nach einem der Ansprüche 5 bis 7,
dadurch gekennzeichnet, daß die hinteren Anschlag-Einrichtungen wenigstens ein hinteres Anschlagorgan (44a, 44b) aufweisen, das im wesentlichen auf der Höhe der Hinterachse (14) angeordnet und dazu bestimmt ist, wenigstens eine der hinteren Rollen (32a, 32b) anzuhalten, um die Stellung der maximalen Rückwärtsverstellung des Schlittens zu definieren.

9. Gerät nach einem der Ansprüche 5 bis 8,
dadurch gekennzeichnet, daß die Anschlag-Anordnung Stoßdämpfern (46a, 46b) des Schlittens (15) zugeordnet ist.

10. Gerät nach einem der Ansprüche 5 bis 9,
dadurch gekennzeichnet, daß die vorderen Anschlag-Einrichtungen (40a, 40b) ein Energierückgabesystem (46a, 46b) aufweisen, das dazu bestimmt ist, bei Freigabe des Schlittens (15) vor einem Meßzyklus die Energie wieder freizusetzen, die beim Aufprallen der vorderen Anschlageinrichtungen (40a, 40b, 30a, 30b) gespeichert worden ist.

11. Gerät nach einem der Ansprüche 1 bis 10,
dadurch gekennzeichnet, daß die Betätigungseinrichtungen (28) der Einrichtungen (26) zum Verstellen des Schlittens (15) Einrichtungen zur automatischen Bestimmung der Verstell- und Freigabesequenzen des Schlittens (15) auf der Fahrbahn aufweisen, die Positionsgebern (48) zugeordnet sind.

12. Gerät nach einem der Ansprüche 1 bis 11,
dadurch gekennzeichnet, daß die Einrichtungen (MC, 19a, 19b) zum Berechnen der Deformation der Fahrbahn Winkelcodierer (19a, 19b) aufweisen, die dazu bestimmt sind, den Grad der Schwenkung der Fühlerarme (18, 20) zu messen, und Einrichtungen (MC) zum Bestimmen der Verstellung der Kufen in Abhängigkeit von diesem Grad der Schwenkung.

13. Gerät nach einem der Ansprüche 1 bis 12,
dadurch gekennzeichnet, daß es wenigstens einen Neigungsmesser (52, MD, MCI) aufweist, der dazu bestimmt ist, den Krümmungsradius der Fahrbahn am Scheitelpunkt der Deformationsmulde zu bestimmen.

14. Gerät nach Anspruch 13,
dadurch gekennzeichnet, daß der Neigungsmesser wenigstens umfaßt:
- einen um eine waagerechte Achse (P) schwenkbaren, mit dem hinteren Ende (18b) eines Fühlerarmnes (18) gelenkig verbundenen Arm (51), der mit einer Kufe (52) versehen ist, die in einem bestimmten Abstand (L) von der Kufe (50) des genannten Fühlerarms vorgesehen ist,
- Einrichtungen (MD) zum Messen der Winkelverstellung dieses gelenkig angeschlossenen Arms (51) um seine Schwenkachse (P), und
- Einrichtungen (MCI) zum Berechnen der Krümmung der Fahrbahn (1) anhand dieser Winkelverstellung und des Krümmungsradius am Scheitelpunkt der Deformationsmulde, wobei dieser Neigungsmesser außerdem Einrichtungen (MS) zum Speichern der Rechenwerte zugeordnet ist.

15. Gerät nach Anspruch 14,
dadurch gekennzeichnet, daß der gelenkig angeschlossene Arm (51) wegnehmbar ist.

16. Gerät nach einem der Ansprüche 13 bis 15,
dadurch gekennzeichnet, daß die Einrichtungen zum Bestimmen der Deformation und der Neigungsmesser gleichzeitig in Betrieb gesetzt werden.

17. Gerät nach einem der Ansprüche 1 bis 16,
dadurch gekennzeichnet, daß es einem Datenverarbeitungssystem (SI) zugeordnet ist, das dazu bestimmt ist, Ausreißer-Rechenwerte zu beseitigen.
